# EUROPEAN PATENT SPECIFICATION

(11) **EP 0 992 663 B1**
(45) Date of publication and mention of the grant of the patent: **29.01.2003**
(21) Application number: 99119031.5
(22) Date of filing: 29.09.1999
(51) Int. Cl.: F02D 21/08

(54) **Control system for supercharged engine**
Steuersystem für aufgeladene Brennkraftmaschine
Système de commande pour moteur à combustion suralimenté

(30) Priority: 30.09.1998 JP 27912598
(43) Date of publication of application: 12.04.2000
(73) Proprietor: Mazda Motor Corporation, Aki-gun, Hiroshima 730-8670 (JP)
(72) Inventor: Watanabe, Tomomi, Aki-gun, Hiroshima 730-8670 (JP); Hayashibara, Hiroshi, Aki-gun, Hiroshima 730-8670 (JP); Matsuo, Yuji, Aki-gun, Hiroshima 730-8670 (JP); Araki, Keiji, Aki-gun, Hiroshima 730-8670 (JP)
(74) Representative: Müller-Boré & Partner Patentanwälte

(56) References cited:
- EP-A- 0 747 585
- EP-A- 0 892 165
- EP-A- 0 965 740
- EP-A- 0 984 153
- DE-A- 19 902 349
- DE-C- 19 728 352
- US-A- 5 738 126
- US-A- 5 778 674
- PATENT ABSTRACTS OF JAPAN vol. 1998, no. 14, 31 December 1998 (1998-12-31) & JP 10 231730 A (ISUZU), 2 September 1998 (1998-09-02)

## Description

The invention relates to a control system for an engine equipped with a turbo supercharger that is installed in an automobile.

Conventionally, in an exhaust gas recirculation system for a diesel engine having an exhaust gas recirculation (EGR) passage through which an exhaust gas is partly recirculated from an exhaust passage into an intake air passage and an exhaust gas recirculation (EGR) valve provided in this exhaust gas recirculation passage for regulating the recirculation volume of exhaust gas that is admitted, control of the exhaust gas recirculation valve is accomplished so as to reduce NOₓ emissions and suppress generation of smoke, while a target a target value is established for an excess air ratio or an air-to-fuel ratio and the exhaust gas recirculation valve'is controlled so as to eliminate any deviation between the target value and an detected value. Such a diesel engine control system is known from, i.e., Japanese Unexamined Patent Publication No. 8-338318.

That is to say, in the diesel engine, NOₓ emissions are reduced by admitting a relatively large volume of exhaust gas in an operating region of mid- and low-engine loads where the excess air ratio is high, but because there is a tendency for smoke to increase dramatically when the air-fuel ratio becomes lower than a certain value due to an increase in the recirculation volume of exhaust gas, in order to achieve both NOₓ reduction and smoke reduction, it is necessary to regulate the recirculation volume of exhaust gas so as to keep the air-to-fuel ratio at a prescribed ratio. Consequently, with the aforementioned prior art system, a target value for the excess air ratio corresponding to an air-to-fuel ratio is set in accordance with engine operating conditions, and in addition, an actual excess air ratio is detected by an excess air ratio sensor. Control is executed such that when the actual excess air ratio becomes larger than the target air excess ratio, the actual excess air ratio is reduced by opening the exhaust gas recirculation valve so as to increase the recirculation volume of exhaust gas, while conversely when it becomes smaller than the target excess air ratio, it is increased by closing the exhaust gas recirculation valve so as to reduce the recirculation volume of exhaust gas, or by cutting such altogether.

In addition, as shown in Japanese Unexamined Patent Publication No. 10 - 47070 for example, an engine has also been known which is equipped with a turbosupercharger (which is hereinafter referred to as a turbocharger for simplicity) such that an exhaust gas flow area varying means is formed by providing variable vanes which form variable nozzles whose opening can be changed, on a turbine of the turbocharger, and the turbine efficiency is controlled by varying the flow area of exhaust gas admitted into the turbine in accordance with engine operating conditions.

As noted above, a turbocharger equipped with exhaust gas flow area varying means for varying the flow area through which exhaust gas flows into the turbine and a system which provides feedback control of the exhaust gas recirculation valve in accordance with air-fuel ratios have each been known from before, but conventionally these two devices have had no relationship with each other and have been operated separately. In other words, exhaust gas recirculation has been conducted in order to control emissions in the range of mid- and low-engine loads and the like, while on the other hand the exhaust gas flow area varying means for varying the flow area of exhaust gas admitted into the turbine of the turbocharger has been controlled primarily to improve the engine output performance but has not been sufficiently utilized in order to improve emissions.

When both exhaust gas recirculation system and turbocharger are provided, in a ranges of partial engine loads where exhaust gas recirculation is conducted, supercharging is also conducted. The supercharging increases the charging efficiency and causes such an effect on the recirculation volume of exhaust gas and air-to-fuel ratio that the recirculation volume of exhaust gas increases due to a rise in exhaust pressure. However, these facts have not been sufficiently taken into consideration in the prior art systems.

It is therefore an object of the present invention to provide a control system for an engine equipped with a turbocharger, which can increase the reduction effect of NOₓ emission and smoke by effectively coordinating control of an exhaust gas recirculation (EGR) valve and control of means for varying an exhaust gas flow area through which exhaust gas flows into a turbine of the turbosupercharger in specific regions of engine operating conditions where exhaust gas recirculation (EGR) is conducted.

This object is achieved by a control system having the features defined in claim 1. Preferred embodiments are defined in the subclaims.

The control system is incorporated in an engine equipped with a turbocharger having with exhaust gas flow area varying means for varying the exhaust gas flow area through which exhaust gas flows into a turbine and an exhaust gas recirculation (EGR) system for admitting exhaust gas before or upstream from the turbine into an intake air system via an exhaust gas recirculation valve, which performs exhaust gas recirculation by the exhaust gas recirculation system in regions of engine operating conditions including at least a region of partial load ene operating conditions and accomplishes both control of the exhaust gas flow area varying means and control of the exhaust gas recirculation valve so as to converge an air-fuel ratio at a prescribed air-fuel ratio in that specific regions where the exhaust gas recirculation is conducted.

With the supercharged engine control system of the invention, in the specific regions of engine operating conditions where the exhaust gas recirculation is conducted, while the supercharging is controlled by controlling the exhaust gas flow area varying means, the exhaust gas pressure which effects on the recirculation volume of exhaust gas is regulated. Further, through both control of the exhaust gas flow area varying means and control of the exhaust gas recirculation valve, while the volume ratio of recirculated exhaust gas and fresh intake air is regulated so as to achieve a prescribed air-fuel ratio, a charging efficiency is risen through supercharging, so that the NOₓ emission and smoke reduction effect is enhanced correspondingly to an increase in both volumes of recirculated exhaust gas and fresh intake air.

Control of the exhaust gas flow area varying means which is performed by the supercharged engine control system within the specific region of engine operating conditions where the exhaust gas recirculation is conducted is performed in a specified range of exhaust gas flow area excluding exhaust gas flow areas on upper and lower extreme ends wherein supercharging pressure changes with a change in the exhaust gas flow area. This realizes effective control of supercharging pressure by varying the exhaust gas flow area.

According to another embodiment of the invention, the turboscharger is preferably equipped with, as the exhaust gas flow surface area varying means, variable vanes forming a nozzle of the turbine which are variable in vane opening with respect to the turbine. The supercharged engine control system performs control of the exhaust gas recirculation valve along with regulation of the vain opening of the variable vanes within the range of partial opening in the specific regions of engine operating conditions in which exhaust gas recirculation is conducted. Through this, the control of the exhaust gas recirculation valve can be accomplished with an vane opening of the variable vanes regulated so as to effectively accomplish control of the supercharging pressure. In this embodiment, the supercharged engine control system is adapted to feedback control the exhaust gas recirculation valve so as to converge an actual air-fuel ratio at the target ratio.

According to another embodiment of the invention, the variable range of vane opening in which the variable vanes are controlled in the specific regions of engine operating conditions where the exhaust gas recirculation is conducted is specified as a supercharging pressure range where the supercharging pressure changes with a change in vane opening of the variable vanes, and, more particularly is preferably specified as range corresponding to a range from approximately a midpoint to near the upper limit in the supercharging pressure changeable range in accordance with vane openings. With the supercharged engine control system, a state can be secured wherein supercharging is suitably boosted under effective control of the supercharging pressure.

The variable vanes may be, for example, feedback controlled so as to converge a supercharging pressure which is detected by an intake pressure sensor at a target pressure. Through this, the supercharging pressure is appropriately regulated, while the recirculation volume of exhaust gas is controlled so as to provide a prescribed air-fuel ratio through the control of both variable vanes and exhaust gas recirculation valve. Further, the variable vanes may be feedback controlled so as to a vane opening which is detected by vane opening detection means at a target vane opening. Through this variation, the supercharging pressure is appropriately regulated while the recirculation volume of exhaust gas is controlled so as to provide a prescribed air-fuel ratio through control of both variable vanes and exhaust gas recirculation valve.

According to another embodiment of the invention, the supercharged engine control system controls an air-to-fuel ratio to converge at a prescribed ratio while controlling the variable vanes in the exhaust gas recirculation region of engine operating conditions including the region of partial load to change the vane opening in a specified range wherein the variable vanes are changed to partial vane openings and wherein the supercharging pressure changes with a change in vane opening.

With the supercharged engine control system, the variable vanes of the turbocharger are controlled within the exhaust gas recirculation regions of engine operating conditions wherein the exhaust gas recirculation is conducted, as a result of which, while supercharging is controlled, the exhaust gas pressure which affects the recirculation volume of exhaust gas is regulated. Further, the vane opening of the variable vanes is controlled so as to converge an air-fuel ratio at the prescribed ratio within the specified range wherein the supercharging pressure changes. As a result of which, while the volume ratio of recirculated exhaust gas and fresh intake air is regulated so as to deliver the prescribed air-fuel ratio, the charging efficiency is risen by the supercharging, which causes an effective reduction in NOₓ emission and smoke.

The supercharged engine control system may control the variable vanes to fully close during idling. In other words, the exhaust gas pressure can be risen by fully closing the variable vanes, which is beneficial in promoting exhaust gas recirculation and because the recirculation volume of exhaust gas is small during idling, the exhaust gas pressure will not rise excessively even when fully closing the variable vanes, so there is no aggravation of fuel consumption and of combustibility. Further, the supercharged engine control system may control the variable vanes to fully open and the exhaust gas recirculation valve to fully close in the region of high engine speeds and high engine loads. That is to say, since the recirculation volume of exhaust gas increases in that region of engine operating condition, while the variable vanes are fully opened in order to avoid an excessive rise in the exhaust gas pressure which acts as back pressure on the engine, the exhaust gas recirculation valve is completely closed in order to increase the intake volume of fresh air so as to secure engine output.

According to another embodiment of the invention, the control system for an engine which is equipped with a turborcharger having variable vanes of a turbine operative to change an exhaust gas flow area to the turbine and an exhaust gas recirculation system operative to admit exhaust gas before or upstream from the turbine to recirculate into the intake air system via an exhaust gas recirculation valve, conducts exhaust gas recirculation through the exhaust gas recirculation system in exhaust gas recirculation regions of engine operating conditions including at least a region of partial load and, while controlling the variable vanes in a range of partial vane opening, performs feedback control of the exhaust gas recirculation valve so as to converge an actual air-fuel ratio at a target ratio. The supercharged engine control system further controls the variable vanes to fix the vane opening to a fixed opening in an extent from approximately the midpoint to near the upper limit in a variable range of vane opening where supercharging pressure changes with a change in vane opening in the regions of engine operating conditions where the exhaust gas recirculation is conducted, and to change the vane opening when failing of causing the actual air-to-fuel ratio to converge at the target ratio through the feedback control of the exhaust gas recirculation valve.

With the supercharged engine control system, in the regions of engine operating conditions where exhaust gas recirculation is conducted, the vane opening of the variable vanes of the turbocharger is fixedly set in an extent from approximately the midpoint to near the upper limit in a variable range of vane opening where supercharging pressure changes with a change in vane opening in the regions of engine operating conditions where the exhaust gas recirculation is conducted, so as to increase the recirculation volume of exhaust gas due to a secured amount of fresh air provided by enhancing the supercharging effect appropriately and rising the charging efficiency. In addition, in this state, although the air-fuel ratio is converged at the target basically through the feedback control of the exhaust gas recirculation valve, however, when failing of causing the air-fuel ratio to converge at the target air-fuel ratio, regulation of both recirculation volume of exhaust gas and intake volume of fresh air is achieved by changing the vane opening of the variable vanes.

According to still another embodiment of the invention, the control system for an engine which is equipped with a turbocharger having variable vanes of a turbine operative to change an exhaust gas flow area to the turbine and an exhaust gas recirculation system operative to admit exhaust gas before or upstream from the turbine to recirculate into the intake air system via an exhaust gas recirculation valve, conducts exhaust gas recirculation through the exhaust gas recirculation system in exhaust gas recirculation regions of engine operating conditions including at least a region of partial load and, while controlling the variable vanes in a range of partial vane opening, performs feedback control of the exhaust gas recirculation valve so as to converge an actual air-fuel ratio at a target ratio. The supercharged engine control system further feedback controls the variable vanes so as to cause a supercharging pressure which is detected by an intake pressure sensor to converge at a target supercharging pressure while controlling the variable vanes to set a vane opening in a variable range of vane opening where supercharging pressure changes with a change in vane opening and estimates a turbine efficiency from an intake air pressure and an intake volume of fresh air with which the exhaust gas recirculation valve is controlled.

With the supercharged engine control system, through the feedback control of the exhaust gas recirculation valve so as to converge an air-fuel ratio at a target air-fuel ratio and the feedback control of the variable vanes so as to converge a supercharging pressure at a target supercharging pressure, the volume ratio of recirculated exhaust gas and fresh intake air is appropriately regulated while supercharging is properly performed, and moreover through the control of the exhaust gas recirculation valve on the basis of the turbine efficiency, the control is appropriately regulated.

The supercharged engine control system is effectively applied to diesel engines. In such the case, it is preferable for the fuel system to be equipped with fuel injectors, one for each cylinder, which are adjustable in fuel injection timing and fuel injection time for which the fuel injector is kept open to spray fuel, and a common rail in which fuel to be supplied to the respective fuel injectors is accumulated. In such a diesel engine while control of the injection volume of fuel is appropriately accomplished in accordance with engine operating conditions, control of the exhaust gas recirculation valve and the variable vanes of the turbocharger is accomplished so as to converge an air-fuel ratio at a target air-fuel ratio.

The above and other objects and features of the present invention will be clearly understood from the following description with respect to the preferred embodiments thereof when considered in conjunction with the accompanying drawings, in which:
Figure 1 is a schematic illustration showing a control system for a turbo supercharged diesel engine in accordance with an embodiment of the invention;
Figures 2A and 2B are schematic view showing the structure of a variable geometric turbocharger (VGT) having variable vanes as one example;
Figure 3 is a block diagram showing the functional structure of an electronic control unit;
Figure 4 is an explanatory diagram showing engine operating regions in order to accomplish control in accordance with engine operating conditions;
Figure 5 is a graph showing the relationship between supercharging pressure and vane opening of the variable geometric turbocharger (VGT);
Figure 6 is a flowchart illustrating a sequence routine of control;
Figure 7 is a graph showing the relationship between exhaust gas recirculation (EGR) valve opening and vane opening of the variable geometric turbocharger (VGT) with respect to NOₓ emission and smoke;
Figure 8 is a graph showing the relationship between vane opening of the variable geometric turbocharger (VGT) and charging efficiency;
Figure 9 is a block diagram showing the functional structure of a variation of the electronic control unit; and
Figure 10 is a block diagram showing variation of the control of the variable geometric turbocharger (VGT).

### DETAILED DESCRIPTION OF THE PREFERRED EMBODIMENT

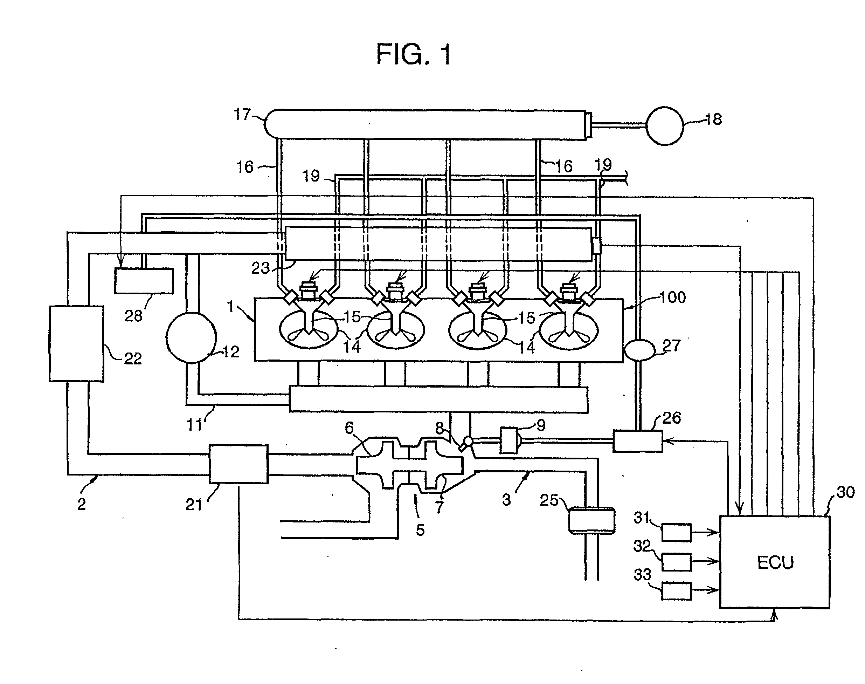

Referring to the drawings in detail, and with particular reference to Figure 1, which shows a supercharged diesel engine 100 equipped with a control system according to an embodiment of the invention, the diesel engine 100 is provided with an intake air passage 2 and an exhaust gas passage 3 are connected to an engine body 1. A turbocharger 5 is also installed in the diesel engine 100. The turbocharger 5 includes a compressor 6 connecting to the intake air passage 2 and a turbine 7 connecting to the exhaust gas passage 3 in order to drive the compressor 6 using exhaust gas energy and is also equipped with exhaust gas flow area varying means which comprises variable vanes 8 and an actuator 9 that drives the variable vanes 8 of the turbine 7, as will be described later. Furthermore, the diesel engine 100 is provided with an exhaust gas recirculation (EGR) system which comprises an exhaust gas recirculation (EGR) passage 11 and an exhaust gas recirculation (EGR) valve 12 provided in the exhaust gas recirculation passage 11. More specifically, in each cylinder 14 of the engine body 1 is a fuel injection valve 15 with multiple spray nozzles for spraying fuel into the combustion chamber. The fuel injection valve 15 at an end through which fuel is supplied thereto is connected to a common rail 17 via a distribution passage 16. The common rail 17 is connected to a fuel injection pump 18, so that fuel supplied from the fuel injection pump 18 is sent to each fuel injection valve 15 after being accumulated in the common rail 17. The fuel injection valve 15 has a construction enabling control of a fuel injection time for which the fuel injector is kept open and a fuel injection timing in accordance with control signals. The fuel injection valve 15 at another end through which fuel is delivered is connected to a return passage 19. The intake air passage 2 is provided in order from the upstream side with an air flow sensor 21, the compressor 6 of the turbocharger 5, an intercooler 22 and a surge tank 23 having a pressure sensor 24 provided thereon. In addition, the exhaust gas passage 3 is provided with the turbine 7 of the turbocharger 5 and a catalytic converter 25 thereon.

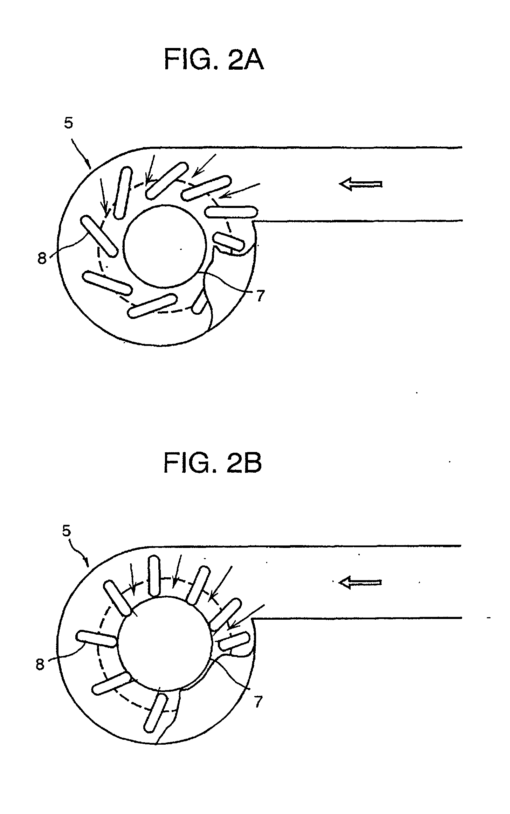

The turbocharger 5 is of a variable geometric type which is equipped with a number of variable vanes 8 forming nozzles on the perimeter of the turbine 7 as shown in Figure 2A and 2B. That is to say, the variable geometric turbocharger (VGT) 5 is such that a vane opening of the variable vanes 8, in other words a nozzle aperture (an area through which exhaust gas flows into the turbine 7), can be varied from a full closed position (a minimum flow area) shown in Figure 2A to the full open position (a maximum flow area) shown in Figure 2B by adjusting the angle of the variable vanes 8, so that the turbine efficiency can be controlled. The actuator 9 shown in Figure 1, which drives the variable vanes 8, is connected to a vacuum pump 27 via a duty controllable electromagnetic valve 26. The duty controllable electromagnetic valve 26 operates to regulate the ratio of vacuum pressure and atmospheric pressure which are introduced into the actuator 9 so as to control a vane opening formed between each adjacent variable vanes 8 of the variable geometric turbocharger 5. The exhaust gas recirculation passage 11 is such that one end thereof is connected to the exhaust gas passage 3 upstream from the turbine 7, while the other end thereof is connected to the surge tank 23 of the intake air passage 2. The exhaust gas recirculation valve 12 is connected to the vacuum pump 27 via a duty controllable electromagnetic valve 28. The ratio of vacuum pressure and atmospheric pressure which are introduced into the exhaust gas recirculation valve 12 is regulated through duty control of the electromagnetic valve 28 so as to control a valve opening of the exhaust gas recirculation valve 12.

Control signals are output from an electronic control unit (ECU) 30 to the fuel injection valves 15 and to the electromagnetic valves 26 and 28. Signals from the air flow sensor 21 and intake air pressure sensor 24 are input into the,electronic control unit 30, and furthermore, signals from an accelerator pedal travel sensor 31 for detecting an accelerator pedal travel, a crank angle sensor 32 for detecting a crank angle of the diesel engine 100, and a common rail pressure sensor 33 for detecting fuel pressure in the common rail 17 are also input into the electronic control unit 30. A fuel injection timing and the amount of fuel injection from the fuel injection valve 15 are controlled by the control signals output to the fuel injection valves 15 from the electronic control unit 30, and the vane opening formed between each adjacent variable vanes 8 of the variable geometric turbocharger 5 is controlled by a control signal (duty signal) output to the electromagnetic valve 26 and, in addition, the valve opening of the exhaust gas recirculation valve 12 is controlled by a control signal (duty signal) output to the electromagnetic valve 28.

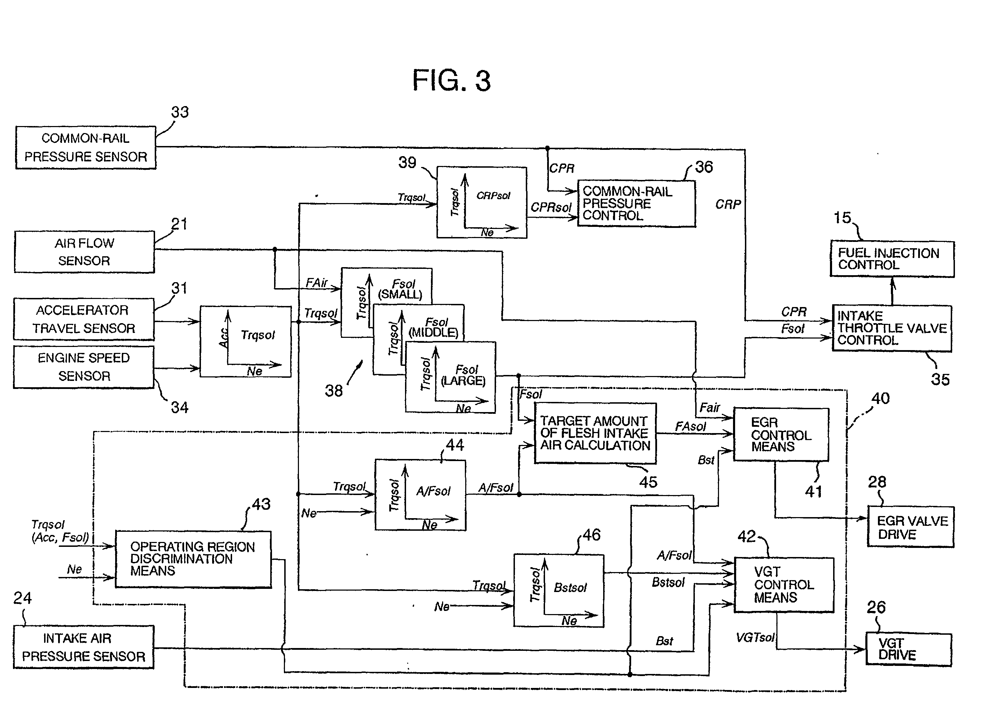

Referring to Figure 3 which schematically shows the electronic control unit 30, there are injection volume of fuel control means 35 for controlling the injection volume of fuel through the fuel injection valve 15, common rail pressure control means 36 for controlling the fuel pressure inside the common rail 17, and control means 40 for accomplishing and correlating control of the exhaust gas recirculation valve 12 and control of the variable geometric turbocharger 5 so that exhaust gas recirculation is accomplished at least in the region of partial loads and the air-fuel ratio becomes a prescribed air-fuel ratio in that region where the exhaust gas recirculation is performed. The injection volume of fuel control means 35 reads a target engine output torque *Trqsol* of the diesel engine 100 from a torque map 37 on the basis of the accelerator travel detected by the accelerator travel sensor 31 and the engine speed *Ne* detected by the engine speed detecting means 34 which detects the frequency of a crank angle signal, and reads a target injection volume of fuel *Fsol* from a three dimensional fuel injection map 38 on the basis of the target engine output torque *Trqsol,* the engine speed *Ne* and the actual intake volume of fresh air *Fair* detected by the air flow sensor 21, and controls fuel injection by regulating the excitation time of the fuel injection valve 15 on the basis of the target injection volume of fuel *Fsol* and the fuel pressure *CRP* inside the common rail 17 detected by the pressure sensor 33. The common rail pressure control means 36 reads a target common rail pressure *CRPsol* from a pressure map 39 on the basis of the engine speed *Ne* and the target engine output torque *Trqsol,* and controls fuel pressure regulating means (not shown) provided in the fuel system on the basis of the target common rail pressure *CRPsol* and the detected fuel pressure *CRP*. The control means 40 includes an exhaust gas recirculation control means 41, a variable geometric turbocharger control means 42 and an engine operating region discrimination means 43 for regulating operation at these two means 41 and 42 according to engine operating regions.

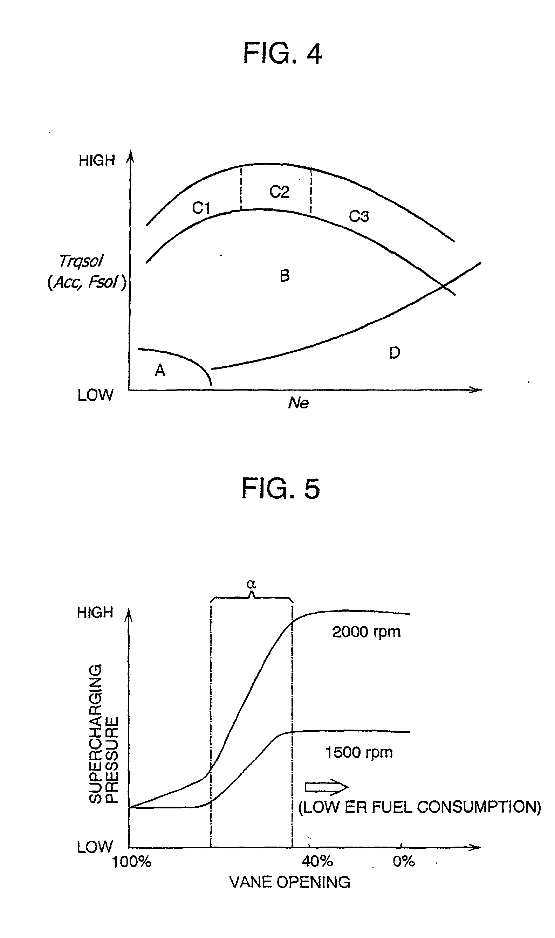

The exhaust gas recirculation control means 41 accomplishes feedback control of the exhaust gas recirculation valve 12 so that an air-to-fuel ratio becomes the target air-to-fuel ratio *A*/*Fsol* in a specified region of partial loads as described below. Specifically, a target air-to-fuel ratio *A*/*Fsol* is read from an air-to-fuel ratio map 44 on the basis of the target engine output torque *Trqsol* and the engine speed *Ne,* and a target intake volume of fresh air *FAsol* that is to be introduced into the combustion chamber is computed on the basis these target air-to-fuel ratio *A*/*Fsol* and target injection volume of fuel *Fsol* in target intake volume of fresh air computation means 45. Signals representative of the target intake volume of fresh air *FAsol* and the actual intake volume of fresh air *Fair* detected by the air flow sensor 21 are input to the exhaust gas recirculation control means 41. Further, a control signal in accordance with the difference between the target intake volume of fresh air *FAsol* and the actual intake volume of fresh air *Fair* is output to the electromagnetic valve 28 for actuating the exhaust gas recirculation valve 12 from the exhaust gas recirculation control means 41, and through this, the feedback control of the exhaust gas recirculation valve 12 is accomplished so as to eliminate the difference between these volumes of fresh intake air *FAsol* and *Fair.* The variable geometric turbocharger control means 42 accomplishes the feedback control of the variable vanes 8 of the variable geometric turbocharger 5 so that a supercharging pressure becomes a target supercharging pressure while the vane opening of the variable geometric turbocharger 5 are maintained within a specified range of partial vane openings between full open and full closed positions in which the supercharging pressure changes according to vane openings of the variable vanes 8. In other words, the target supercharging pressure *Bstsol* is read from a supercharging pressure map 46 on the basis of the target engine output torque *Trqsol* and the engine speed *Ne.* A control signal in accordance with the difference between these target supercharging pressure *Bstsol* and actual supercharging pressure *Bst* is output by the variable geometric turbocharger control means 42 such as to actuate the electromagnetic valve 26 to feedback control the vane opening of the variable vanes 8 of the variable geometric turbocharger 5 so as thereby to eliminate the difference between these supercharging pressures *Bstsol* and *Bst*. The operating region discrimination means 43 discriminates an operating region on the basis of the engine speed *Ne* and a value which corresponds to an engine load, such as a target engine output torque *Trqsol* or an accelerator travel *Acc*, or otherwise a target injection volume of fuel *Fsol.* Further, controlled conditions of these exhaust gas recirculation control means 41 and variable geometric turbocharger control means 42 are changed in accordance with engine operating regions discriminated by the operating region discrimination means 43. For example, as shown in Figure 4, engine operating conditions are previously divided into four regions, namely an idling region A, a partial load region B, a high load region C and a deceleration region D. Further, on the basis of the discrimination in the operating region discrimination means 43, in the partial load region B, feedback control is performed for the exhaust gas recirculation valve 12 in accordance with the difference between the target and actual volumes of fresh intake air *FAsol* and *Fair* in the exhaust gas recirculation control means 41 and for the variable geometric turbocharger 5 in accordance with the difference between the target and actual supercharging pressures *Bstsol* and *Bst* in the variable geometric turbocharger control means 42. On the other hand, these feedback control are halted in the idling region A, the high load region C and the deceleration region D so as to change the exhaust gas recirculation valve 12 and the variable geometric turbocharger 5 in controlled condition as described in detail later.

In the control by the variable geometric turbocharger control means 42 in the partial load region B, the vane opening of the variable geometric turbocharger 5 is controlled within a specified control range as shown in Figure 5 by a concrete example.

Referring to Figure 5 which shows the relationship between vane opening of the variable geometric turbocharger 5 and supercharging pressure for engine speeds *Ne,* 1500 rpm and 2000 rpm. As shown in the diagram, the supercharging pressure is kept at a low level in a specified range of vane openings of the variable geometric turbocharger 5 on the completely open side (which is a range from 100 % to 70 % vane opening), rises as the vane opening becomes smaller in the range α of partial vane opening (which is the range from 70 % to 40 % vane opening), and is kept at a high level in a specified range of vane openings on the completely closed side (which is a range from 40 % vane opening to completely closed vane position). In the specified range on the completely open side or on the completely closed side, the supercharging pressure is approximately constant with respect to a change in vane opening, so supercharging pressure control through regulation of the vane opening is difficult in that range, and moreover, when the variable vanes are controlled to around 40% vane opening or less, aggravation of fuel consumption is caused by a rise in back pressure, which is not desirable. Therefore, in order to secure controllability of the supercharging pressure, it is necessary to control the vane opening, variation of which changes the supercharging pressure, in the range α of partial vane opening, and in particular, in order to have a sufficient supercharging action while avoiding aggravation of fuel consumption, it is preferable to set as an available control range the range of vane opening corresponding to a range from an approximate midpoint to near the upper limit in the supercharging pressure fluctuation range. For example, it would be fine to set the available control range of vane opening to a range of around 40 % to 60 % vane opening.

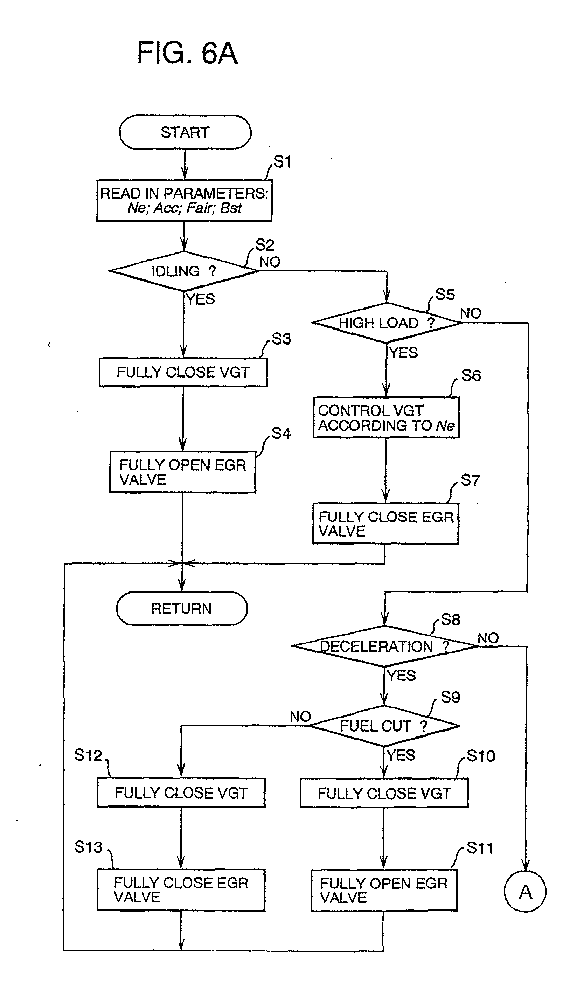

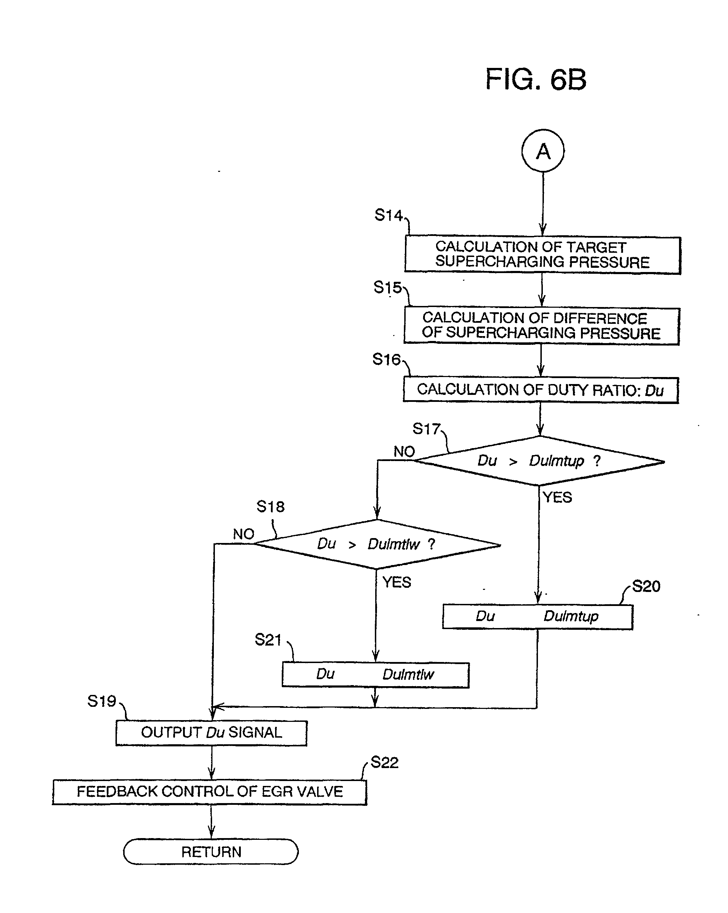

Figure 6 shows a concrete example of a sequential routine of exhaust gas recirculation valve and variable turbocharger control which is performed by the control means 40.

As shown in Figure 6, when the sequence logic starts, control proceeds to a block at step S1 where control parameters including at least an engine speed *Ne,* an accelerator pedal travel *Acc*, an intake volume of fresh air *Fair* introduced into the intake air passage 2 and a pressure of intake air *Bst* are read in, and a determination is subsequently made at step S2 as to whether the diesel engine 100 operates in the idling region A. When operating in the idling region A, the variable geometric turbocharger 5 is controlled to completely close at step S3 and the exhaust gas recirculation valve 12 is controlled to completely open at step S4. On the other hand, when operating out of the idling region A, a determination is made at step S5 as to whether the diesel engine 100 operates in the high load region C. When operating in the high load region C, the variable geometric turbocharger 5 is controlled to set its variable vane opening in accordance with the engine speed *Ne* at step S6 and the exhaust gas recirculation valve 12 is controlled to completely close at step S7. In this case, the variable vane opening of the variable geometric turbocharger 5 is controlled to completely close the variable vanes 8 in the high load, low speed region C1, to increase its variable vane opening in accordance with an increase in engine speed *Ne* in the high load, mid-speed region C2, and to completely open the variable vanes 8 in the high load, high speed region C3.

When operating out of the high load region C, a determination is made at step S8 as to whether the diesel engine 100 operates in the deceleration region D, and when operating in the deceleration region D, another determination is subsequently made at step S9 as to whether the diesel engine 100 is in a fuel cut state. During deceleration in the fuel cut state, the variable geometric turbocharger 5 is controlled to completely close the variable vanes 8 at step S10 and the exhaust gas recirculation valve 12 is controlled to completely open at step S11. While, during deceleration in any other state, the variable geometric turbocharger 5 is controlled to completely close the variable vanes 8 at step S12, the exhaust gas recirculation valve 12 is controlled to completely close at step S13.

When the answers to the determinations made at steps S2, S5 and S8 are all negative, this indicates that the diesel engine 100 operates in the partial load region B. For control in the partial load region B, a target supercharging pressure *Bstsol* is computed at step S14, and a supercharging pressure deviation, which is the deviation between the target supercharging pressure *Bstsol* and the intake air pressure (actual supercharging pressure) *Bst*, is computed at step S15. Subsequently, after computing a duty ratio *Du* with which the duty controllable electromagnetic valve 26 is operated to drive the variable geometric turbocharger 5 in accordance with the supercharging pressure deviation at step S16, a determination is made at step S17 as to whether or not the duty ratio *Du* is higher than an upper limit duty ratio *Dulmtup* in a control range. When the duty ratio *Du* is equal to or lower than the upper limit duty ratio *Dulmt,* then a determination is further made at step S18 as to whether duty ratio *Du* is lower than a lower limit duty ratio *Dulmtlw* in the control range. That is to say, the control range of duty ratio *Du* is previously determined correspondingly to the available control range of variable vane opening between 40 and 60 % vane opening.

When the duty ratio *Du* is within the specified range, i.e. between the upper and lower limit duty ratios *Dulmtup* and *Dulmtlw,* a duty signal representative of the duty ratio *Du* is output to the electromagnetic valve 26 at step S19. When the upper or the lower limit duty ratio *Dulmtup* or *Dulmtlw is* exceeded, after fixing the duty ratio *Du* to the upper limit duty ratio *Dulmtup* at step S20 or the lower limit duty ratio *Dulmtlw* at step S21, a duty signal representative of the upper or the lower limit duty ratio *Dulmtup* or *Dulmtlw* is output to the electromagnetic valve 26 at step S19. Then, at step S22, the feedback control of the exhaust gas recirculation valve 12 is performed at step S22. Specifically, a duty ratio at which the exhaust gas recirculation valve 12 is computed in accordance with the difference between the target and actual intake volumes of fresh air *FAsol* and *Fair*, and a duty signal is output to the electromagnetic valve 28.

With the diesel engine control system of the above embodiment, in the partial load region B, the feedback control of the exhaust gas recirculation valve 12 is conducted such that an actual intake volume of fresh air *Fair* becomes coincide with a target intake volume of fresh air *FAsol*, that is to say so that an actual air-to-fuel ratio becomes a target air-to-fuel ratio *A*/*Fsol*, and the vane opening of the variable geometric turbocharger 5 is controlled within the specified range through the process from step S14 to step S21 in the sequence routine in the Figure 6, as a result of which supercharging is also controlled so as to be beneficial in reducing NOₓ emission and smoke. In other words, as the recirculation volume of exhaust gas increases, the level of NOₓ emission is lowered, but when the air-to-fuel ratio becomes too low due to an increase in exhaust gas recirculation rate, smoke increases because the combustion state worsens due to a decline in the intake volume of fresh air, and consequently the feedback control of the exhaust gas recirculation valve 12 is accomplished using as a target air-to-fuel ratio *As*/*Fsol* such an air-to-fuel ratio that reducing the level of NOₓ emission while not increasing smoke. In this case, in conjunction with this kind of control of the exhaust gas recirculation valve 12, the variable geometric turbocharger 5 is also controlled to regulate its vane opening appropriately within the specified range. As a result, the air charging efficiency can be heightened through supercharging within a range that does not cause aggravation of fuel consumption due to an excessive rise of back pressure, and the exhaust gas recirculation is promoted by throttling the nozzle of the variable geometric turbocharger 5 with an effect of increasing the exhaust gas pressure to a certain degree. Consequently, the NOₓ reduction effect is enhanced through exhaust gas recirculation while the smoke reduction effect is also enhanced by securing a intake volume of fresh air.

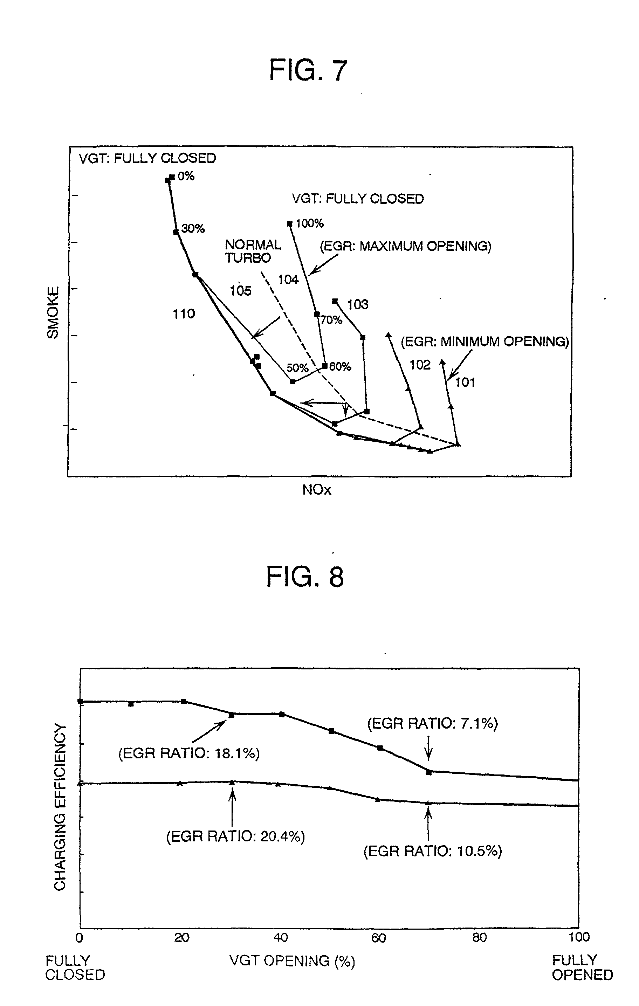

The foregoing effects will be specifically described with reference to Figures 7 and 8.

Figure 7 shows changes in smoke and NOₓ emission for various valve openings of the exhaust gas recirculation valve 12 and vane openings of the variable geometric turbocharger 5 in the mid-speed, mid-load region where the engine speed *Ne* is 2000 rpm, and net mean effective pressure *Pe* is 5.7 kg/cm². In this graph, lines 101 to 105 that connect various points indicate values of NOₓ emission and smoke under various valve openings of exhaust gas recirculation valve 12 as the vane opening of the variable geometric turbocharger 5 is changed from completely open (100%) to completely closed (0%), with line 101 in a lower right area resulting when the exhaust gas recirculation valve 12 opens small and lines shifting upward and to the left accompanying an increase in valve opening of the exhaust gas recirculation valve 12.

As shown in Figure 7, the relationship between NOₓ emission and smoke with respect to valve opening of the exhaust gas recirculation valve 12 is such that NOₓ decreases in volume while smoke increases in volume as the exhaust gas recirculation valve 12 gradually opens. In addition, looking at the relationship between vane opening of the variable geometric turbocharger 5 and NOR emission and smoke, if the variable geometric turbocharger 5 opens the variable vanes 8 around 60% or greater, a sufficient supercharging effect can not be obtained and the charging efficiency lowers, causing smoke to increase, while when it opens the variable vanes 8 in the range from about 60 % to about 40 %, the charging efficiency rises through supercharging and the recirculation volume of exhaust gas increases properly because of a rise in exhaust gas pressure as the vane opening is reduced, so NOₓ emission and smoke decline in volume. However when the vane opening is further reduced, the exhaust gas pressure rises too far and instead the intake volume of fresh air declines with an increase in the recirculation volume of exhaust gas, so smoke increases. Accordingly, it is preferable for the vane opening of the variable geometric turbocharger 5 to be around 40% to 50% in order to reduce NOₓ emission and smoke. Characteristics that NOₓ emission and smoke show when the vane opening of the variable geometric turbocharger 5 is in the desirable range and the exhaust gas recirculation valve 12 varies its valve opening is shown by thick solid line 110 in the graph. In comparison to characteristics of NOₓ emission and smoke when a normal turbosupercharger is used (which is shown by broken line 111), the NOₓ emission is greatly reduced if the smoke is kept at a same level as indicated by an arrow "a", and smoke is greatly reduced if the NOₓ emission is kept at a same level as shown by an arrow "b".

Referring to Figure 8 which shows the relationship between air charging efficiency and vane opening of the variable geometric turbocharger 5 with respect to exhaust gas recirculation (EGR) ratio (indicated in parentheses) when the exhaust gas recirculation valve 12 is kept at a fixed valve opening, with line 121 showing the case where the diesel engine 100 operates with a mid-speed *(Ne* = 2000 rpm) and a mid-load (*Pe =* 5.7 kg/cm²) and line 122 showing the case where the diesel engine 100 operates with a low speed (*Ne =* 1500 rpm) and a low load (*Pe* = *5.7* kg/cm²). As clearly understood in Figure 8, over the range of vane opening of the variable geometric turbocharger 5 from around 70% to around 40%, the air charging efficiency and the recirculation volume of exhaust gas both increase with an effect of reducing NOₓ emission and smoke as the variable geometric turbocharger 5 changes its vane opening smaller. In particular, the supercharging efficiency is higher on a side of mid-speed and mid-load as compared to a side of low speed and low load, so an increase in air charging efficiency and an increase in the recirculation volume of exhaust gas are large, and the effect on NOₓ emission and smoke reduction is enhanced.

With the above embodiment, in the idling region, the high load region and the deceleration region, the vane opening control and the exhaust gas recirculation valve control are accomplished suitable to the various operating conditions. In other words, in the idling region, because the volume of exhaust gas is small, the back pressure does not increase in excess even if the variable geometric turbocharger 5 fully closes, and because the injection volume of fuel is small, the excess air ratio is sufficiently high, so that the recirculation volume of exhaust gas is increased as large as possible by fully closing the variable geometric turbocharger 5 and fully opening the exhaust gas recirculation valve 12 with an effect of achieving a desired NOR reduction. In the high load region, the exhaust gas recirculation valve 12 is closed to halt exhaust gas recirculation in order to improve engine output performance. Furthermore, the supercharging efficiency is increased by reducing the vane opening of the variable geometric turbocharger 5 on a low speed side in the high load region, a rise in back pressure is avoided by increasing the vane opening of the variable geometric turbocharger 5 in the high load, high speed region where there is an abundant volume of exhaust gas. Furthermore, in the deceleration region, in order to secure good responsiveness upon reacceleration made immediately after deceleration, the variable geometric turbocharger 5 is controlled to completely close, and the exhaust gas recirculation valve 12 is controlled to closed to avoid aggravation of reaccelerative performance due to exhaust gas recirculation excepting during a fuel cut. During a fuel cut, the exhaust gas recirculation valve 12 is controlled to open in order to avoid a rise in back pressure.

Control of the variable geometric turbocharger in accordance with the operating regions is not limited to the above described embodiment, and, for example, it would be fine conduct feedback control of the variable geometric turbocharger 5 up to the high load region on the basis of a comparison between a target and an actual supercharging pressure unless a maximum permissible cylinder pressure (Pmax) is exceeded in the high load region.

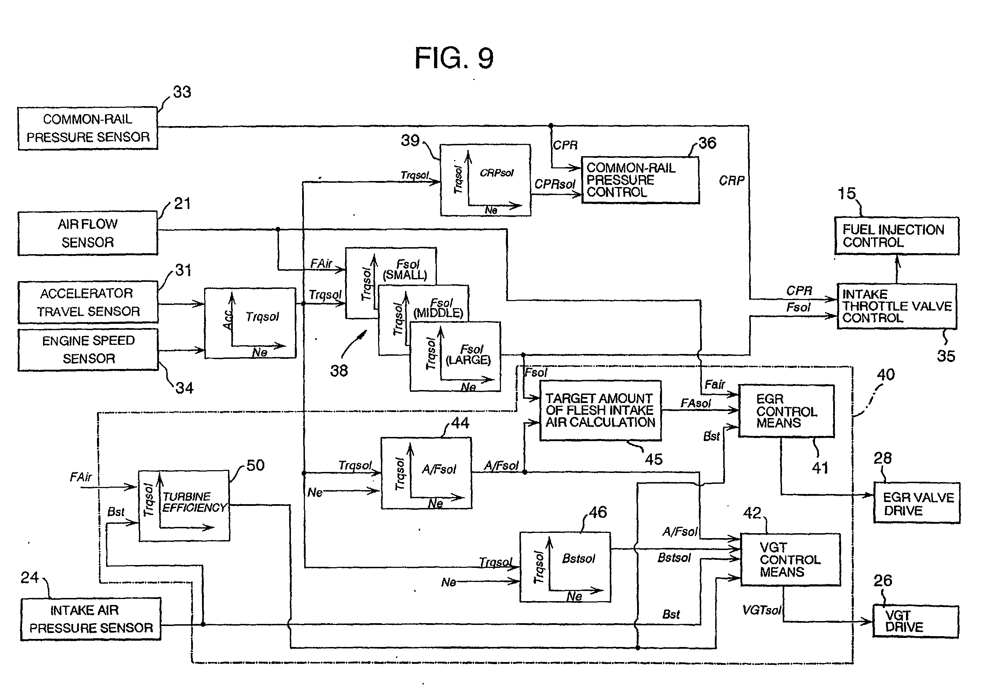

In the embodiment shown in Figure 3, in controlling the amount of fuel injection, a target engine output torque *Trqsol* is found in the torque map 37 in accordance with an engine speed *Ne* and an accelerator pedal travel *Acc*, following which a target injection volume of fuel *Fsol* is found in the fuel injection map 38 in accordance with the target engine output torque *Trqsol*, the engine speed *Ne* and an intake volume of fresh air *Fair.* However, it would also be fine to provide a map of target injection volume of fuel *Fsol* in accordance with an accelerator pedal travel *Acc* and an engine speed *Ne* in place of these torque map 37 and fuel injection 38 and to directly find a target injection volume of fuel *Fsol* in the fuel injection map. In this case, the map of target air-to-fuel ratio *A*/*Fsol* and the map of target supercharging pressure *Bstsol* are related to engine speed *Ne* and target injection volume of fuel *Fsol.* In addition, the control means 40 in the embodiment shown in Figure 3 discriminates operating regions in the operating region discrimination means 43, and changes the control condition of the variable geometric turbocharger 5 and the exhaust gas recirculation valve 12 in accordance therewith. However, as shown in Figure 9, it would also be fine to discriminate the turbine efficiency from a turbine efficiency map 50 in accordance with an intake volume of fresh air and intake air pressure and to change the control conditions of the variable geometric turbocharger 5 and the exhaust gas recirculation valve 12 in accordance with the turbine efficiency. In this case, because, in the operating region (the mid-load, mid-speed region) in which the turbine efficiency is high, a reduction in NOₓ emission and smoke is realized by increases in both the recirculation volume of exhaust gas and the intake volume of fresh air which are caused by appropriately throttling the nozzle of the variable geometric turbocharger 5 as discussed above, it would be fine to conduct feedback control of the exhaust gas recirculation valve and also control the variable geometric turbocharger 5 within the specified range of vane openings (e.g. around 40% to 60%). On the other hand, in the operating region in which the turbine efficiency is low (the idling region for example), it would be fine to control the variable geometric turbocharger 5 to completely close and the exhaust gas recirculation valve 12 to completely open.

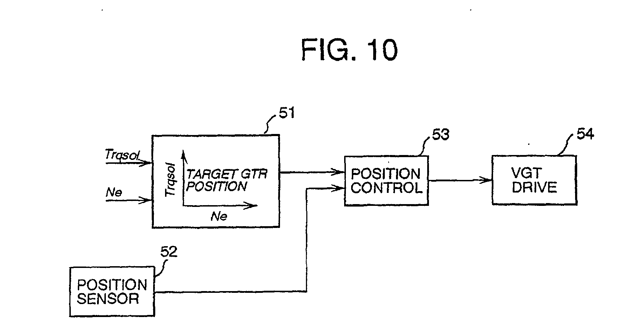

The variable geometric turbocharger control means 42 in the control means 40 of the embodiment shown in Figure 3 is adapted to control the variable geometric turbocharger 5 in accordance with the deviation of an actual intake volume of fresh air *Fair* from a target one *FAsol*. However, as another technique, it would also be fine, as shown in Figure 10, to compute a target position of the variable geometric turbocharger 5 from a vane position map 51 in accordance with a target engine output torque *Trqsol,* or an accelerator pedal travel *Acc*, and an engine speed *Ne,* and conduct feedback control of the variable geometric turbocharger 5 through the vane position control means 53 in accordance with the deviation of an actual vane position of the variable geometric turbocharger 5 which is detected by a vane position sensor 52 and the target position. These vane position control means 53, vane position map 51 and vane position sensor 52 may be used in place of the variable geometric turbocharger control means 42 and supercharging pressure map 46 shown in Figure 3, or may be used together with them such as to control, for example, the variable geometric turbocharger 5 by the variable geometric turbocharger control means 42 in Figure 3 in the high load region and by the vane position control means 53 in Figure 10 in the low- and mid-load regions.

In addition, since the vane opening of the variable geometric turbocharger 5 is related to the recirculation volume of exhaust gas (the recirculation volume of exhaust gas changes through changes in exhaust gas pressure which are caused by changes in vane opening of the variable geometric turbocharger 5), it would also be fine to control the vane opening of the variable geometric turbocharger 5 in accordance with the deviation of an actual intake volume of fresh air *Fair* from a target intake volume of fresh air *FAsol* so as to bring that an air-to-fuel ratio into coincidence with a target air-to-fuel ratio *A*/*Fsol*. Otherwise, it would also be fine as basic control to conduct feedback control of the exhaust gas recirculation valve 12 in accordance with a target intake volume of fresh air *FAsol* and an actual intake volume of fresh air *Fair* with a fixed vane opening of the variable geometric turbocharger 5 within the specified range and, only if the feedback control alone fails of causing the air-to-fuel ratio to converge at the target air-to-fuel ratio *A*/*Fsol*, to change the vane opening of the variable geometric turbocharger 5. Although, in the above embodiment, the turbocharger is of the variable geometric type which employs variable vanes 8 as means for varying an exhaust gas flow area, however, the means for varying the exhaust gas flow area is not limited to the variable vanes 8 and may be, for example, comprised of a valve that is installed in a passage to the turbine 7 and opens and closes partly the passage to the turbine 7.

As explained in detail above, in the control system for a diesel engine equipped with an exhaust gas recirculation system and a turbo supercharger having means for varying an exhaust gas flow area such as variable vanes or the like, exhaust gas recirculation is conducted at least in the partial load region, and both control of the exhaust gas recirculation valve and control of the exhaust gas flow area varying means such as variable vanes or the like are performed so as to bring an air-to-fuel ratio into coincidence with a prescribed ratio in that region. Consequently, in the operating region where exhaust gas recirculation is conducted, volume proportions of recirculated exhaust gas and fresh intake air can be regulated so as to provide a specified air-to-fuel ratio while conducting proper supercharging. As a result, while appropriately regulating volume proportions of fresh intake air and recirculated exhaust gas, volumes of the fresh intake air and recirculated exhaust gas are increased by rising the charging efficiency through supercharging, so as thereby to further reduce NOₓ emission and smoke.

Although the present invention has been fully described by way of the preferred embodiments thereof with reference to the accompanying drawings, it is to be noted that various changes and modifications are apparent to one having ordinary skill in the art. Therefore, unless otherwise such changes and modifications depart from the scope of the invention, they should be construed as included therein.

## Claims

1. A control system for a supercharged engine (100) equipped with a turbosupercharger (5) having:
exhaust gas flow area varying means (8) for varying an exhaust gas flow area through which exhaust gas flows into a turbine (7) and an exhaust gas recirculation device (11, 12, 28) operative to admit exhaust gas before said turbine (7) into an intake system (2, 21, 22) through an exhaust gas recirculation valve (12), and
control means (30, 41, 42, 53) for controlling said exhaust gas flow area varying means (8) and said exhaust gas recirculation device (11, 12, 28) at least in an exhaust gas recirculation region of partially loaded engine operating conditions so as to cause an air-to-fuel ratio to converge at a target ratio in said exhaust gas recirculation region;
**characterized by**
a control region in which said control means (30, 41, 42, 53) controls said exhaust gas flow area varying means (8) in said exhaust gas recirculation region is a specified variable range of exhaust gas flow area, excluding upper and lower extreme ends of said variable range of exhaust gas flow area, where supercharging pressure changes with a change in said exhaust gas flow area.

2. A control system for a supercharged engine (100) as defined in claim 1, wherein said control means (30, 41, 42, 53) controls said exhaust gas flow area varying means (8) to provide an approximately full area and said exhaust gas recirculation valve (12) to fully close in an engine operating region of higher engine speeds and higher engine loads.

3. A control system for a supercharged engine (100) as defined in claim 1, wherein said turbosupercharger (5) has variable vanes (8) forming a nozzle which is variable in vane opening relative to said turbine (7) as said exhaust gas flow area varying means (8) and said control means (30, 41, 42, 53) controls said variable vanes (8) to partially open while controlling said exhaust gas recirculation valve (12) in said exhaust gas recirculation regions.

4. A control system for a supercharged engine (100) as defined in claim 3, wherein said control means (30, 41, 42, 53) feedback controls said exhaust gas recirculation valve (12) so as to converge an actual air-to-fuel ratio at a target ratio.

5. A control system for a supercharged engine (100) as defined in claim 3, wherein said control means (30, 41, 42, 53) controls said variable vanes (8) to change a vane opening in a specified range of vane opening where supercharging pressure changes with a change in said vane opening in said exhaust gas recirculation regions.

6. A control system for a supercharged engine (100) as defined in claim 5, wherein said specified variable range of vane opening corresponds to an extent from an approximate midpoint to near an upper limit in said specified variable range of vane opening.

7. A control system for a supercharged engine (100) as defined in claim 3, wherein said control means (30, 41, 42, 53) feedback controls said variable vanes (8) so as to cause an actual supercharging pressure which is detected by an intake air pressure sensor (24) to converge at a target supercharging pressure.

8. A control system for a supercharged engine (100) as defined in claim 3, wherein said control means (30, 41, 42, 53) feedback controls said variable vanes (8) so as to converge an actual vane opening which is detected by an opening sensor (52) at a target vane opening.

9. A control system for a supercharged engine (100) as defined in claim 1, wherein said control means (30, 41, 42, 53) controls said variable vanes (8) to fully close in a region of engine operating conditions for idling.

10. A control system for a supercharged engine (100) as defined in claim 1, wherein said exhaust gas flow area varying means (8) comprises variable vanes (8) forming a nozzle which is variable in vane opening relative to said turbine (7) and said control means (30, 41, 42, 53) controls said variable vanes (8) to change a vane opening in a specified range of partial vane opening where supercharging pressure changes with a change in said vane opening while controlling said exhaust gas recirculation valve (12) so as to cause an air-to-fuel ratio to converge at a target ratio in said exhaust gas recirculation regions.

11. A control system for a supercharged engine (100) as defined in claim 10, wherein said control means (30, 41, 42, 53) controls said exhaust gas flow area varying means (8) to provide an approximately full area and said exhaust gas recirculation valve (12) to fully close in an engine operating region of higher engine speeds and higher engine loads.

12. A control system for a supercharged engine (100) as defined in claim 1, wherein said exhaust gas flow area varying means (8) comprises variable vanes (8) forming. a nozzle of said turbine which is variable in vane opening relative to said turbine (7) in a specified variable range of partial vane opening, and said control means (30, 41, 42, 53) feedback controls said exhaust gas recirculation valve (12) so as to converge an actual air-to-fuel ratio at a target ratio and controls said variable vanes in said specified variable range of partial vane opening in said exhaust gas recirculation regions of engine operating conditions so as to fixe said vane opening in an extent from an approximate midpoint to near an upper limit in said specified variable range of vane opening where supercharging pressure changes with a change in said vane opening and to change said vane opening when failing of causing said actual air-to-fuel ratio to converge at said target ratio.

13. A control system for a supercharged engine (100) as defined in claim 1, wherein said exhaust gas flow area varying means (8) comprises variable vanes (8) forming a nozzle of said turbine which is variable in vane opening relative to said turbine (7), and said control means (30, 41, 42, 53) controls, in said exhaust gas recirculation regions of engine operating conditions, variable vanes (8) in a specified variable range of partial vane opening, feedback controls said exhaust gas recirculation valve (12) so as to converge an actual air-to-fuel ratio to a target ratio, feedback controls said variable vanes to cause a supercharging pressure which is detected by an intake air pressure sensor (24) to converge at a target supercharging pressure with an vane opening in a variable range of vane opening where a supercharging pressure changes with a change in said vane opening, estimates a turbine efficiency based on an intake air pressure and an intake volume of fresh air and controls said exhaust gas recirculation valve (12) in accordance with said turbine efficiency.

14. A control system for a supercharged engine (100) as defined in claim 1, wherein said engine (100) is a diesel internal combustion engine having a fuel system which includes fuel injectors (15), one for each cylinder (14), which are adjustable in fuel injection timing and fuel injection time for which said fuel injector (15) is kept open and a common rail (17) in which fuel that is sent to said fuel injectors (15) is accumulated.

## Patentansprüche

1. Regel- bzw. Steuersystem für eine aufgeladene Brennkraftmaschine bzw. -motor (100), welche mit einem Turbovorverdichter bzw. -auflader (5) ausgestattet ist, aufweisend:
Abgasströmungsfläche-Änderungsmittel bzw. -einrichtungen (8) zum Variieren eines Abgasströmungsbereichs bzw. einer Abgasströmungsfläche, durch welche(n) Abgas in eine Turbine (7) und eine Abgasrezirkulationsvorrichtung (11, 12, 28) fließt bzw. strömt, welche arbeitet, um Abgas vor der Turbine (7) in ein Einlaßsystem (2, 21, 22) durch ein Abgasrezirkulationsventil (12) einzubringen bzw. einzulassen, und
Regel- bzw. Steuermittel (30, 41, 42, 53) zum Regeln bzw. Steuern der Abgasströmungsfläche-Änderungsmittel (8) und der Abgasrezirkulationsvorrichtung (11, 12, 28) wenigstens in einem Abgasrezirkulationsbereich von teilweise aufgeladenen Motorbetriebsbedingungen, um zu bewirken, daß sich ein Luft-Kraftstoff-Verhältnis einem Zielverhältnis in dem Abgasrezirkulationsbereich annähert bzw. zu diesem konvergiert;
**gekennzeichnet dadurch**
**daß** eine Regel- bzw. Steuerregion, in welcher die Regel- bzw. Steuermittel (30, 41, 42, 53) die Abgasströmungsfläche-Änderungsmittel (8) in der Abgasrezirkulationsregion steuern, ein bestimmter, variabler Bereich der Abgasströmungsfläche ist, mit Ausnahme von oberen und unteren, extremen bzw. Grenzenden des variablen Bereichs der Abgasströmungsfläche, wo sich ein Aufladedruck mit einer Änderung in der Abgasströmungsfläche ändert.

2. Steuersystem für eine aufgeladene Brennkraftmaschine (100) nach Anspruch 1, worin die Regel- bzw. Steuermittel (30, 41, 42, 53) die Abgasströmungsfläche-Änderungsmittel (8), um eine ungefähr vollständige Fläche zur Verfügung zu stellen, und das Abgasrezirkulationsventil (12) regeln bzw. steuern, um vollständig in einem Motorbetriebsbereich von höheren Motordrehzahlen und höheren Motorlasten zu schließen.

3. Steuersystem für eine aufgeladene Brennkraftmaschine (100) nach Anspruch 1, worin der Turboauflader (5) variable Schaufeln (8) aufweist, welche eine Düse ausbilden, welche in ihrer Schaufelöffnung relativ zu der Turbine (7) als bzw. wie die Abgasströmungsfläche-Änderungsmittel (8) variabel ist und die Steuermittel (30, 41, 42, 53) die variablen Schaufeln (8) steuern, um teilweise zu öffnen, während sie das Abgasrezirkulationsventil (12) in den Abgasrezirkulationsregionen steuern.

4. Steuersystem für eine aufgeladene Brennkraftmaschine (100) nach Anspruch 3, worin die Steuermittel (30, 41, 42, 53) das Abgasrezirkulationsventil (12) feedback-steuern, um ein tatsächliches Luft-Kraftstoff-Verhältnis einem Zielverhältnis anzunähern bzw. zu diesem zu konvergieren.

5. Steuersystem für eine aufgeladene Brennkraftmaschine (100) nach Anspruch 3, worin die Steuermittel (30, 41, 42, 53) die variablen Schaufeln (8) steuern, um eine Schaufelöffnung in einem bestimmten Bereich einer Schaufelöffnung zu ändern, wo sich ein Aufladedruck mit einer Änderung in der Schaufelöffnung in den Abgasrezirkulationsbereichen ändert.

6. Steuersystem für eine aufgeladene Brennkraftmaschine (100) nach Anspruch 5, worin der bestimmte, variable Bereich einer Schaufelöffnung einem Ausmaß von einem ungefähren Mittelpunkt bis nahe zu einer oberen Grenze in dem bestimmten, variablen Bereich einer Schaufelöffnung entspricht.

7. Steuersystem für eine aufgeladene Brennkraftmaschine (100) nach Anspruch 3, worin die Steuermittel (30, 41, 42, 53) die variablen Schaufeln (8) so feedback-steuern, um einen tatsächlichen Aufladedruck zu bewirken, welcher durch einen Einlaßluft-Drucksensor (24) detektiert wird, um sich einem Zielaufladedruck anzunähern bzw. zu diesem zu konvergieren.

8. Steuersystem für eine aufgeladene Brennkraftmaschine (100) nach Anspruch 3, worin die Steuermittel (30, 41, 42, 53) die variablen Schaufeln (8) so feedback-steuern, um eine tatsächliche Schaufelöffnung, welche durch einen Öffnungssensor (52) detektiert wird, einer Zielschaufelöffnung anzunähern.

9. Steuersystem für eine aufgeladene Brennkraftmaschine (100) nach Anspruch 1, worin die Steuermittel (30, 41, 42, 53) die variablen Schaufeln (8) steuern, um vollständig in einer Region von Motorbetriebsbedingungen für einen Leerlauf zu schiießen.

10. Steuersystem für eine aufgeladene Brennkraftmaschine (100) nach Anspruch 1, worin die Abgasströmungsfläche-Änderungsmittel (8) variable Schaufeln (8) umfassen, welche eine Düse ausbilden, welche in der Schaufelöffnung relativ zu der Turbine (7) variabel ist, und die Steuermittel (30, 41, 42, 53) die variablen Schaufeln (8) steuern bzw. regeln, um eine Schaufelöffnung in einem bestimmten Bereich einer teilweisen Schaufelöffnung zu ändern, wo sich ein Aufladedruck mit einer Änderung in der Schaufelöffnung ändert, während sie das Abgasrezirkulationsventil (12) so steuern bzw. regeln, um zu bewirken, daß sich ein Luft-Kraftstoff-Verhältnis einem Zielverhältnis in den Abgasrezirkulationsbereichen bzw. -regionen annähert bzw. zu diesem konvergiert.

11. Steuersystem für eine aufgeladene Brennkraftmaschine (100) nach Anspruch 10, worin die Steuermittel (30, 41, 42, 53) die Abgasströmungsfläche-Änderungsmittel (8), um eine ungefähr vollständige Fläche zur Verfügung zu stellen, und das Abgasrezirkulationsventil (12) steuern, um vollständig in einer Motorbetriebsregion von höheren Motordrehzahlen und höheren Motorlasten zu schließen.

12. Steuersystem für eine aufgeladene Brennkraftmaschine (100) nach Anspruch 1, worin die Abgasströmungsfläche-Änderungsmittel (8) variable Schaufeln (8) umfassen, welche eine Düse der Turbine bilden, welche in der Schaufelöffnung relativ zu der Turbine (7) in einem bestimmten, variablen Bereich einer teilweisen Schaufelöffnung variabel ist, und die Steuermittel (30, 41, 42, 53) das Abgasrezirkulationsventil (12) so feedback-steuern, damit sich ein tatsächliches Luft-Kraftstoff-Verhältnis einem Zielverhältnis annähert bzw. zu diesem konvergiert, und die variablen Schaufeln in dem bestimmten, variablen Bereich einer teilweisen Schaufelöffnung in den Abgasrezirkulationsregionen von Motorbetriebsbedingungen so steuern, um die Schaufelöffnung in einem Ausmaß von einem ungefähren Mittelpunkt bis nahe zu einer oberen Grenze in dem bestimmten, variablen Bereich einer Schaufelöffnung festzulegen, wo ein Aufladedruck sich mit einer Änderung in der Schaufelöffnung ändert, und um die Schaufelöffnung zu ändern, wenn verfehlt wird, daß bewirkt wird, daß sich das tatsächliche Luft-Kraftstoff-Verhältnis dem Zielverhältnis annähert bzw. zu diesem konvergiert.

13. Steuersystem für eine aufgeladene Brennkraftmaschine (100) nach Anspruch 1, worin die Abgasströmungsfläche-Änderungsmittel (8) variable Schaufeln (8) umfassen, welche eine Düse der Turbine bilden, welche in der Schaufelöffnung relativ zu der Turbine (7) variabel ist, und die Steuermittel (30, 41, 42, 53) in den Abgasrezirkulationsregionen von Motorbetriebsbedingungen variable Schaufeln (8) in einem bestimmten, variablen Bereich einer teilweisen Schaufelöffnung steuern, das Abgasrezirkulationsventil (12) so feedback-steuern, damit sich ein tatsächliches Luft-Kraftstoff-Verhältnis einem Zielverhältnis annähert, die variablen Schaufeln feedback-steuern, um zu bewirken, daß sich ein Aufladedruck, welcher durch einen Einlaßluft-Drucksensor (24) detektiert wird, einem Zielaufladedruck mit einer Schaufelöffnung in einem variablen Bereich einer Schaufelöffnung annähert bzw. konvergiert, wo sich ein Aufladedruck mit einer Änderung in der Schaufelöffnung ändert, eine Turbineneffizienz bzw. -wirksamkeit basierend auf einem Einlaßluftdruck und einem Einlaßvolumen von frischer Luft abschätzen und das Abgasrezirkulationsventil (12) in Übereinstimmung mit der Turbineneffizienz bzw. -leistung steuern bzw. regeln.

14. Steuersystem für eine aufgeladene Brennkraftmaschine (100) nach Anspruch 1, worin der Motor bzw. die Brennkraftmaschine (100) eine Dieselbrennkraftmaschine ist, welche ein Kraftstoffsystem aufweist, welches jeweils eine Kraftstoffeinspritzeinrichtung (15) für jeden Zylinder (14), welche in ihrem Kraftstoffeinspritzzeitpunkt und der Kraftstoffeinspritzzeit einstellbar sind, für welche die Kraftstoffeinspritzeinrichtung (15) geöffnet gehalten ist, und eine gemeinsame Druckleitung (17) beinhaltet, in welcher Kraftstoff, welcher zu den Kraftstoffeinspritzeinrichtungen (15) gesandt wird, gespeichert bzw. aufgebaut ist.

## Revendications

1. Système de commande pour moteur à combustion suralimenté (100) muni d'un turbocompresseur (5) comportant :
un moyen de variation d'aire d'écoulement des gaz d'échappement (8) pour faire varier une aire d'écoulement des gaz d'échappement à travers laquelle les gaz d'échappement s'écoulent dans une turbine (7) et un dispositif de recirculation des gaz d'échappement (11, 12, 28) fonctionnel pour admettre les gaz d'échappement avant ladite turbine (7) dans un système d'admission (2, 21, 22) à travers une soupape de recirculation des gaz d'échappement (12), et
un moyen de commande (30, 41, 42, 53) pour commander ledit moyen de variation d'aire d'écoulement des gaz d'échappement (8) et ledit dispositif de recirculation des gaz d'échappement (11, 12, 28) au moins dans une région de recirculation des gaz d'échappement à conditions de fonctionnement de moteur partiellement chargé de façon à amener un rapport air/carburant à converger vers un rapport cible dans ladite région de recirculation des gaz d'échappement ;
**caractérisé en ce que**
une région de commande dans laquelle ledit moyen de commande (30, 41, 42, 53) commande ledit moyen de variation d'aire d'écoulement des gaz d'échappement (8) dans ladite région de recirculation des gaz d'échappement est une plage variable spécifiée de l'aire d'écoulement des gaz d'échappement, excluant les limites extrêmes supérieure et inférieure de ladite plage variable de l'aire d'écoulement des gaz d'échappement, où la pression de suralimentation change avec un changement dans ladite aire d'écoulement des gaz d'échappement.

2. Système de commande pour moteur à combustion suralimenté (100) selon la revendication 1, dans lequel ledit moyen de commande (30, 41, 42, 53) commande ledit moyen de variation d'aire d'écoulement des gaz d'échappement (8) pour procurer une aire approximativement totale et ladite soupape de recirculation des gaz d'échappement (12) pour fermeture totale dans une région de fonctionnement du moteur à vitesses du moteur plus élevées et à charges de moteur plus élevées.

3. Système de commande pour moteur à combustion suralimenté (100) selon la revendication 1, dans lequel ledit turbocompresseur (5) comporte des aubes variables (8) formant une buse qui est d'une ouverture d'aube variable par rapport à ladite turbine (7) comme dit moyen de variation d'aire d'écoulement des gaz d'échappement (8) et ledit moyen de commande (30, 41, 42, 53) commande lesdites aubes variables (8) pour ouverture partielle tout en commandant ladite soupape de recirculation des gaz d'échappement (12) dans leadites régions de recirculation des gaz d'échappement.

4. Système de commande pour moteur à combustion suralimenté (100) selon la revendication 3, dans lequel ledit moyen de commande (30, 41, 42, 53) commande par contre-réaction ladite soupape de recirculation des gaz d'échappement (12) de façon à faire converger un rapport air/carburant réel vers un rapport cible.

5. Système de commande pour moteur à combustion suralimenté (100) selon la revendication 3, dans lequel ledit moyen de commande (30, 41, 42, 53) commande lesdites aubes variables (8) pour changer une ouverture d'aube dans une plage spécifiée d'ouverture d'aube où la pression de suralimentation change avec un changement de ladite ouverture d'aube dans lesdites régions de recirculation des gaz d'échappement.

6. Système de commande pour moteur à combustion suralimenté (100) selon la revendication 5, dans lequel ladite plage variable spécifiée d'ouverture d'aube correspond à une étendue depuis un point milieu approché jusqu'à presque une limite supérieure dans ladite plage variable spécifiée d'ouverture d'aube.

7. Système de commande pour moteur à combustion suralimenté (100) selon la revendication 3, dans lequel le dit moyen de commande (30, 41, 42, 53) commande par contre-réaction lesdites aubes variables (8) de façon à amener une pression de suralimentation réelle qui est détectée par un capteur de pression d'air d'admission (24) à converger vers une pression de suralimentation cible.

8. Système de commande pour moteur à combustion suralimenté (100) selon la revendication 3, dans lequel ledit moyen de commande (30, 41, 42, 53) commande par contre-réaction lesdites aubes variables (8) de façon à faire converger une ouverture d'aube réelle qui est détectée par un capteur d'ouverture (52) vers une ouverture d'aube cible.

9. Système de commande pour moteur à combustion suralimenté (100) selon la revendication 1, dans lequel ledit moyen de commande (30, 41, 42, 53) commande lesdites aubes variables (8) vers fermeture totale dans une région de conditions de fonctionnement du moteur au ralenti.

10. Système de commande pour moteur à combustion suralimenté (100) selon la revendication 1, dans lequel ledit moyen de variation d'aire d'écoulement des gaz d'échappement (8) comprend des aubes variables (8) formant une buse qui est d'une ouverture d'aube variable par rapport à ladite turbine (7) et ledit moyen de commande (30, 41, 42, 53) commande lesdites aubes variables (8) pour changer une ouverture d'aube dans une plage spécifiée d'ouverture d'aube partielle où la pression de suralimentation change avec un changement de ladite ouverture d'aube tout en commandant ladite soupape de recirculation des gaz d'échappement (12) de façon à amener un rapport air/carburant à converger vers un rapport cible dans lesdites régions de recirculation des gaz d'échappement.

11. Système de commande pour moteur à combustion suralimenté (100) selon la revendication 10, dans lequel ledit moyen de commande (30, 41, 42, 53) commande ledit moyen de variation d'aire d'écoulement des gaz d'échappement (8) pour procurer une zone approximativement totale et ladite soupape de recirculation des gaz d'échappement (12) pour fermeture totale dans une région de fonctionnement du moteur de vitesses de moteur plus élevées et de charges de moteur plus élevées.

12. Système de commande pour moteur à combustion suralimenté (100) selon la revendication 1, dans lequel ledit moyen de variation d'aire d'écoulement des gaz d'échappement (8) comprend des aubes variables (8) formant une buse de ladite turbine qui est d'une ouverture d'aube variable par rapport à ladite turbine (7) dans une plage variable spécifiée d'ouverture d'aube partielle, et ledit moyen de commande (30, 41, 42, 53) commande par contre-réaction ladite soupape de recirculation des gaz d'échappement (12) de façon à faire converger un rapport air/carburant réel vers un rapport cible et commande lesdites aubes variables dans ladite plage variable spécifiée d'ouverture d'aube partielle dans lesdites régions de recirculation des gaz d'échappement de conditions de fonctionnement du moteur de façon à fixer ladite ouverture d'aube dans une étendue allant d'un point milieu approximatif jusqu'à près d'une limite supérieure de ladite plage variable spécifiée de l'ouverture d'aube où la pression de suralimentation change avec un changement de ladite ouverture d'aube et pour changer ladite ouverture d'aube lors de l'impossibilité d'amener ledit rapport air/carburant réel à converger vers ledit rapport cible.

13. Système de commande pour moteur à combustion suralimenté (100) selon la revendication 1, dans lequel ledit moyen de variation d'aire d'écoulement des gaz d'échappement (8) comprend des aubes variables (8) formant une buse de ladite turbine qui est d'une ouverture d'aube variable par rapport à ladite turbine (7), et ledit moyen de commande (30, 41, 42, 53) commande, dans lesdites régions de recirculation des gaz d'échappement à conditions de fonctionnement du moteur, des aubes variables (8) dans une plage variable spécifiée d'ouverture d'aube partielle, commande par contre-réaction ladite soupape de recirculation des gaz d'échappement (12) de façon à faire converger un rapport air/carburant réel vers un rapport cible, commande par contre-réaction lesdites aubes variables pour amener une pression de suralimentation qui est détectée par un capteur de pression d'air d'admission (24) à converger vers une pression de suralimentation cible avec une ouverture d'aube dans une plage variable d'ouverture d'aube où une pression de suralimentation change avec un changement de ladite ouverture d'aube, estime une efficacité de la turbine sur la base de la pression d'air d'admission et du volume d'admission d'air frais et commande ladite soupape de recirculation des gaz d'échappement (12) en conformité avec ladite efficacité de la turbine.

14. Système de commande pour moteur à combustion suralimenté (100) selon la revendication 1, dans lequel ledit moteur (100) est un moteur à combustion interne diesel ayant un système de carburant qui comprend des injecteurs de carburant (15), un pour chaque cylindre (14), qui sont ajustables en termes de réglage d'injection de carburant et de temps d'injection de carburant pendant lequel ledit injecteur de carburant (15) est maintenu ouvert et un rail commun (17) dans lequel le carburant qui est délivré auxdits injecteurs du carburant (15) est accumulé.
